# FASCICULE DE BREVET EUROPEEN

(11) **EP 0 720 190 B1**
(45) Date de publication et mention de la délivrance du brevet: **14.08.2002**
(21) Numéro de dépôt: 94500211.1
(22) Date de dépôt: 29.12.1994
(51) Int. Cl.: H01H 9/02, H02B 1/26, H01R 4/48

(54) **Module porte-mécanismes électriques**
Trägermodul für mechanisch-elektrische Bauteile
Holder module for mechanic-electric components

(43) Date de publication de la demande: 03.07.1996
(73) Titulaire: Schneider Electric Espana, S.A., 08007 Barcelona (ES)
(72) Inventeur: Miquel Marti, Salvador, E-08025 Barcelona (ES); Pla Jensen, Eduardo, E-08028 Barcelona (ES)
(74) Mandataire: Joly, Jean-Jacques

(56) Documents cités:
- EP-A- 0 329 843
- DE-B- 2 334 241
- DE-C- 3 543 885
- DE-C- 3 620 416
- FR-A- 2 118 910
- GB-A- 1 269 091
- US-A- 4 046 449

## Description

La présente invention concerne un module porte-mécanismes électriques selon le préambule de la revendication 1. Un tel module développé selon le principe multicombinable du système défini par l'équation M = 71 -0/3 m/m est montré par le brevet ES. 545.782 et dans ses versions étrangères PT 83108, IT 1197778, FR 8607861 et DE 3620416 et qui, de même, est une base creuse commune à n'importe quel mécanisme qui souhaite s'y intégrer: interrupteur, commutateur, fiche, croisillon, fusible, voyant, poussoir ou tout autre ou une combinaison de ceux-ci.

De même, aussi bien dans le cas ci-dessus référencé que dans celui-ci, en combinaison avec un châssis spécialement conçu à cet effet, objet du M.U. ES. n. 293.035 daté du 18 mars 1986 pour "UN CADRE CHASSIS POUR MODULES INVARIABLES PORTEMECANISMES" de la même demanderesse, il est possible d'intégrer différents modules (bases creuses) de mesures proportionnelles à cette équation, en nombre ou quantité directe à la capacité du châssis puisque, de la même manière, il est développé avec les mesures que le principe modulaire mentionné requiert.

Dans ce concept, il est possible de concevoir des modules (bases creuses) dont la proportion répond à la formule précédente dans les versions:
a) 23 x 47
b) 36 x 47
dans lesquelles on peut intégrer une combinaison des premiers a), en les choisissant parmi les mécanismes spécifiés aux points "d à t" (pages 3 et 4) du brevet ES 545782), et une version b), permet, unilatéralement ou indépendamment, d'intégrer une version quelconque des mécanismes détaillés aux points "d à t" ci-dessus référencés.

La version a) intègre des combinaisons multiples ou mécanismes à diverses applications qui permettent sa versatilité fonctionnelle, mais c'est logiquement un produit moins économique de fabrication, mais d'acquisition moins chère par rapport aux performances dont on peut avoir besoin.

La version b) est conçue pour l'incorporation de mécanismes simples pour assurer la réduction du prix du produit lorsqu'il sera nécessaire de le pourvoir de fonctions d'applications multiples dont on peut avoir besoin dans la pratique.

### ETAT DE LA TECHNIQUE

En rapport avec les objectifs de cette invention, objet de ce brevet, l'objet modulaire pour mécanismes électriques que l'on propose est une nouvelle interprétation du brevet mentionné ES.545.782 concernant "UN SYSTEME MODULAIRE UNIQUE POUR FABRICATION DE PETIT MATERIEL ELECTRIQUE" au nom d"'EUNEA". L'objet modulaire est soumis à des dimensions proportionnelles pour se conformer aux normes européennes de sorte que la combinaison avec un cadre-châssis spécifiquement conçu à cet effet et compris dans le Modèle d'Utilité espagnol n° 293.035 intitulé : CADRE CHASSIS POUR MODULES INVARIABLES PORTEMECANISMES, également d'"EUNEA", permette de faire des montages combinés multiples ou répétitifs de ces modules intégrant des mécanismes électriques différents, selon les besoins de l'installation électrique.

L'objet selon l'invention maintient le principe dimensionnel et structurel de base assurant les exigences réglementaires de mesures et sécurité et la rationalité pour insérer des mécanismes, de façon que la structure et ses caractéristiques de base restent inaltérables, même lorsque la fonctionnalité ou l'application et même les pièces pour assurer cette fonctionnalité varient.

### DESCRITION DE L'INVENTION

Une idée de l'invention est de développer un module pour l'installation de mécanismes électriques doté de la faculté de pouvoir être monté sous et sur le cadre châssis portemécanismes. L'objet selon l'invention est atteint par un module porte-mécanismes électriques tel que défini dans la revendication 1.

Une caractéristique essentielle du montage du module par la partie inférieure du châssis est son sertissage ou bridage par le bord supérieur (extérieur) du cadre-châssis en assurant son centrage et son immobilisation.

Une autre caractéristique avantageuse de ce montage est qu'il ne nécessite pas de transformation, modification ou altération structurelle ou dimensionnelle du cadre-châssis et bien entendu du module.

Un autre détail est que les moyens de sertissage ou bridage, du cadre comme du module (base portemécanismes), sont invariables dans tous les cas.

Les revendications dépendantes definissent des modes de réalisation préférés de l'invention.

Nous allons décrire ci-dessous de manière plus précise des caractéristiques de l'invention, en faisant référence aux planches de dessins jointes à ce mémoire, qui représentent de manière quelque peu schématisée et à titre d'exemple uniquement, les détails préférés de l'invention.
Sur les dessins :
La figure 1 est une vue partielle en perspective, de dessus, de l'ensemble du module ou boîtier creux normalisé selon l'invention.
La figure 1A est une vue identique à la précédente, vue de côté.
La figure 1B est une vue identique à la figure 1, vue du dessous.
La figure 2 est une vue du dessus du montage de ce module sur un châssis de support normalisé (U.ES.293.035).
La figure 3 est une vue identique à celle de la figure 2, vue du dessous.
Les figures 3A, 3B et 3C sont respectivement des vues en plan inférieur, en section le long de la ligne A-A de la figure 3C et plan supérieur du montage et accouplement du module portemécanismes dans le châssis.
La figure 4 est une vue en perspective du dessus du module avec le couvercle et une borne en projection de montage.
La figure 5 est une perspective du couvercle du module vue du plan intérieur.
La figure 6 est une perspective de la pièce de la figure précédente vue latéralement.
La figure 7 est une perspective de la pièce de la figure 5 vue du plan supérieur.
La figure 8 est une vue en projection latérale d'une borne avec l'applique à pincement.
La figure 9 est une vue en perspective de l'applique à pincement.
La figure 10 est une vue en plan de la figure 8.
La figure 11 est une vue en perspective d'une borne sans appliques.
La figure 12 est une vue en perspective de la borne avec applique à pincement.
Les figures 12A, B et C sont respectivement des vues en élévation, plan et perspective de la borne des figures 8 à 12 dans une solution de branchement par vis.
Les figures 12D, E, F, G et H sont des exemples en perspective pour solutions avec la même borne des figures 8 à 12 ou 12A à C pour: interrupteur unipolaire ou poussoir; deux versions de commutateur; commutateurs de croisement et pour interrupteur bipolaire d'une ou deux touches.
La figure 13 est une vue en élévation d'un jeu d'organes de débranchement pour bornes avec applique à pincement.
La figure 14 est une vue en perspective d'un jeu d'organes pour débranchement selon la figure 10.
La figure 15 est une perspective de l'organe de débranchement vue du plan extérieur.
La figure 16 est une perspective de la pièce de la figure précédente vue du plan intérieur.
La figure 17 est une perspective de la pièce de la figure 15 vue latéralement.

### DESCRIPTION DES DESSINS

Par rapport à ces illustrations et avec les références affectées à chaque partie du dessin on va décrire au fur et à mesure les caractéristiques structurelles des divers composants d'un mode de réalisation de l'invention.

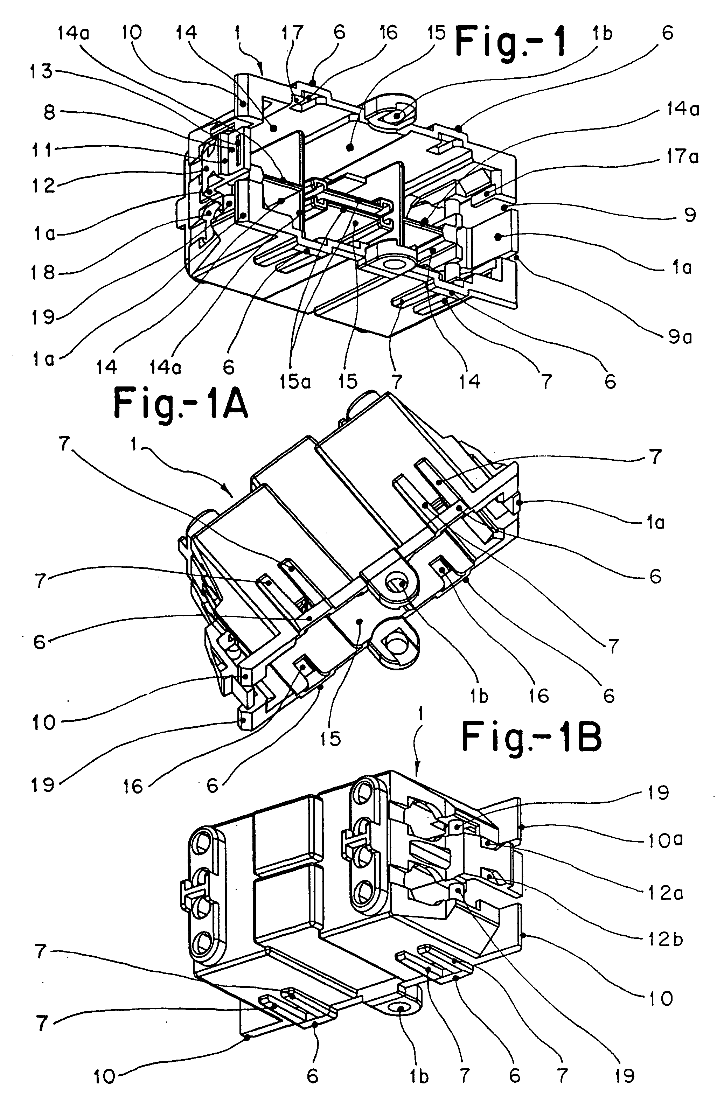

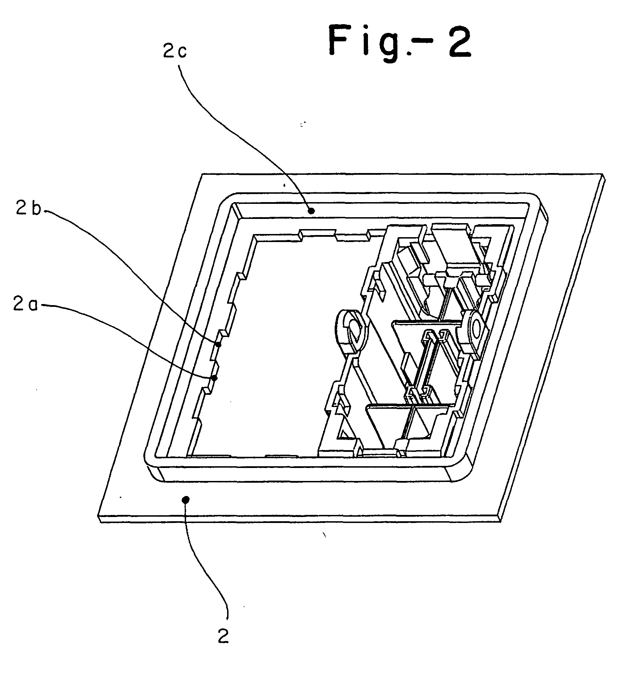

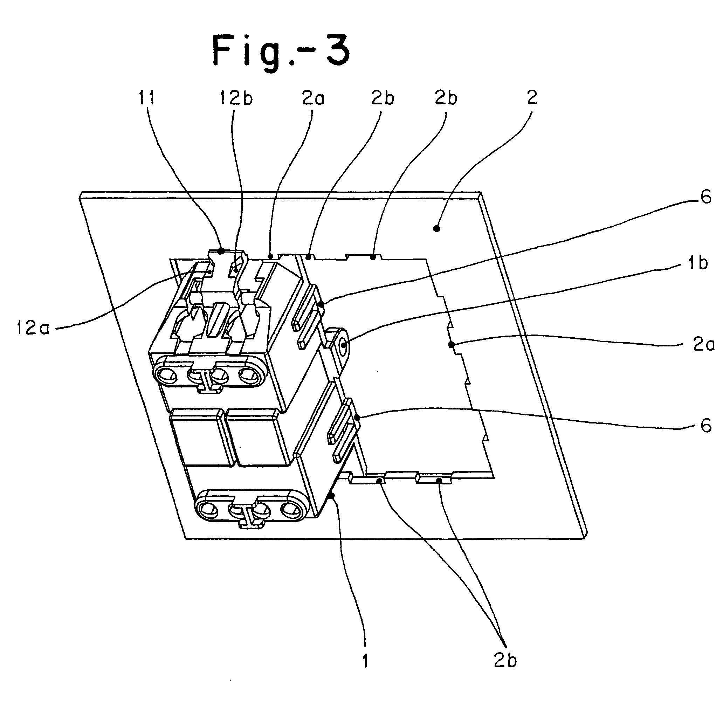

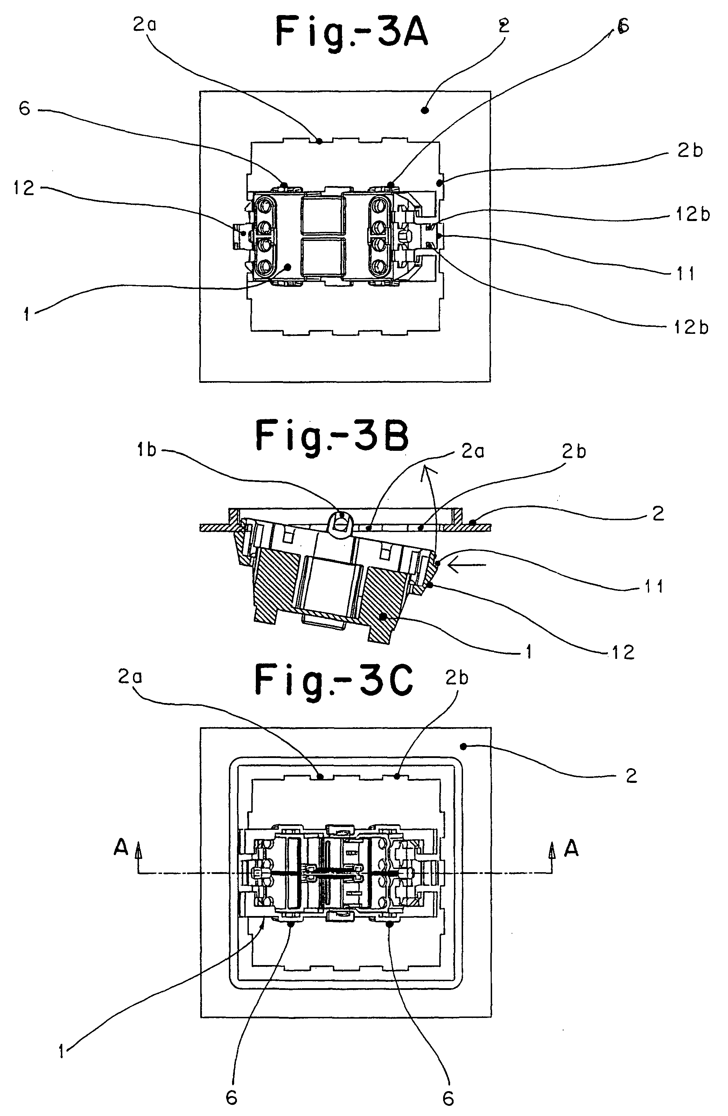

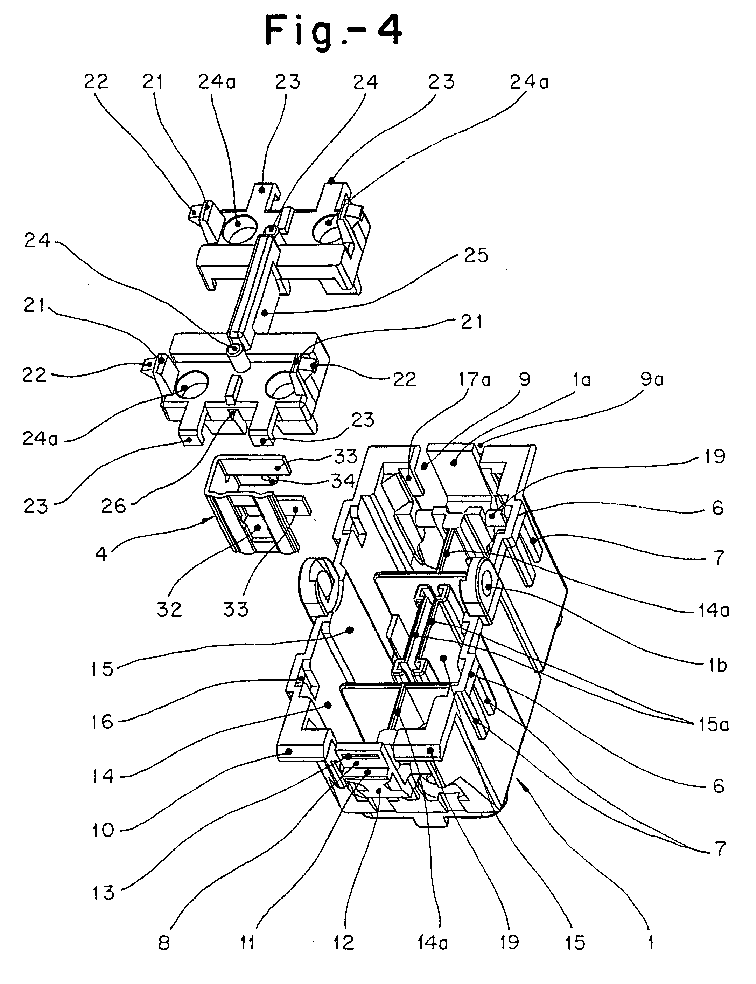

Le corps du module ou base creuse est désigné de manière générale par (1) (Fig. 1, la, lb, 2, 3 et 4); le cadre-châssis où il est installé est désigné par (2) (Fig. 2 et 3) et le couvercle de base creuse est désigné par (3) (Fig. 4, 5, 6 et 7).

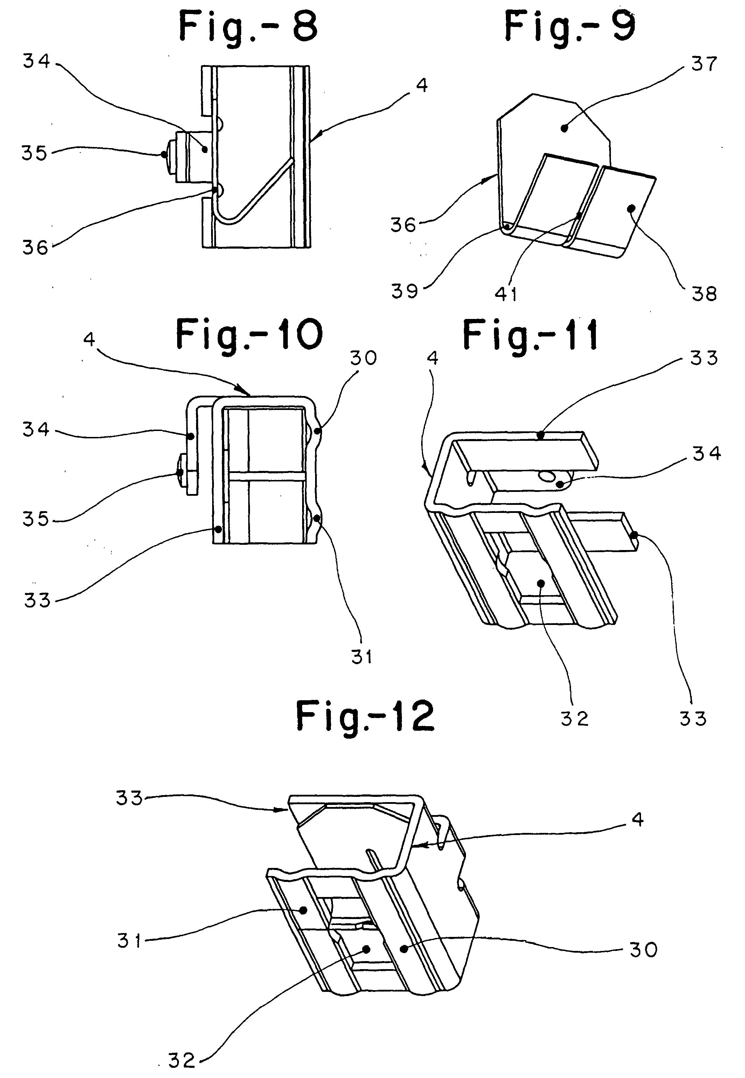

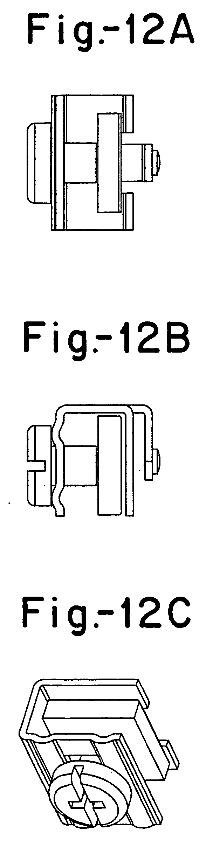

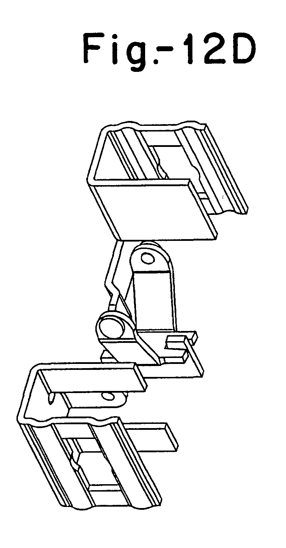

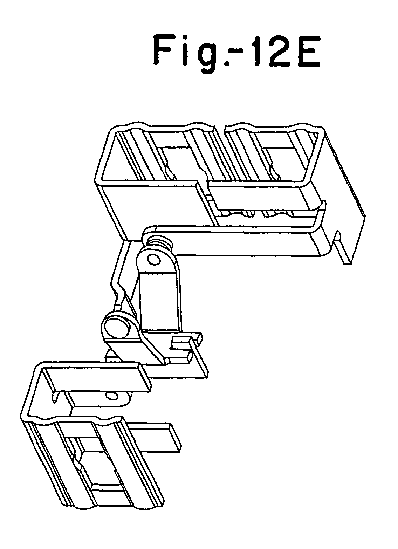

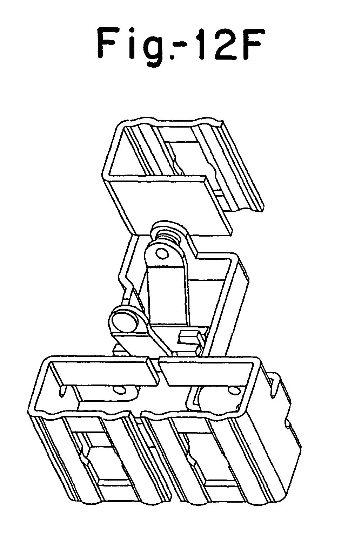

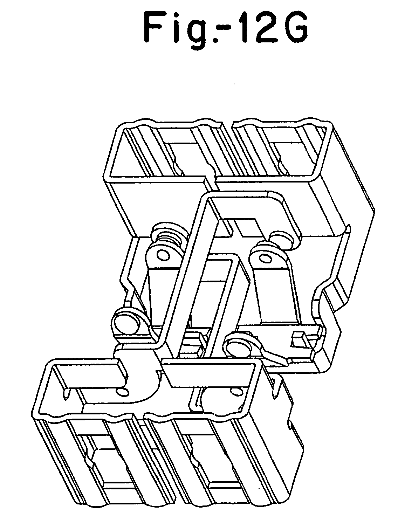

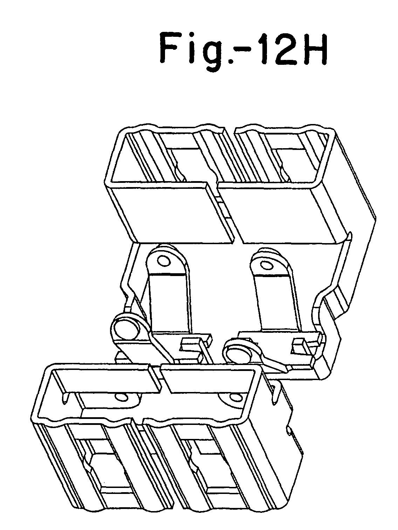

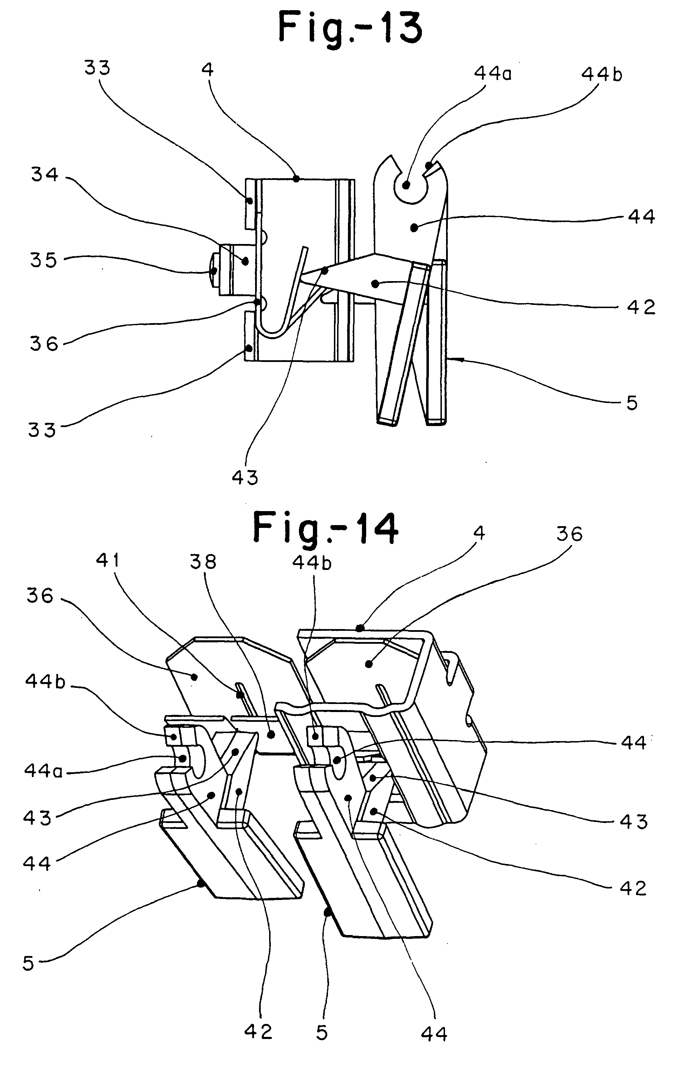

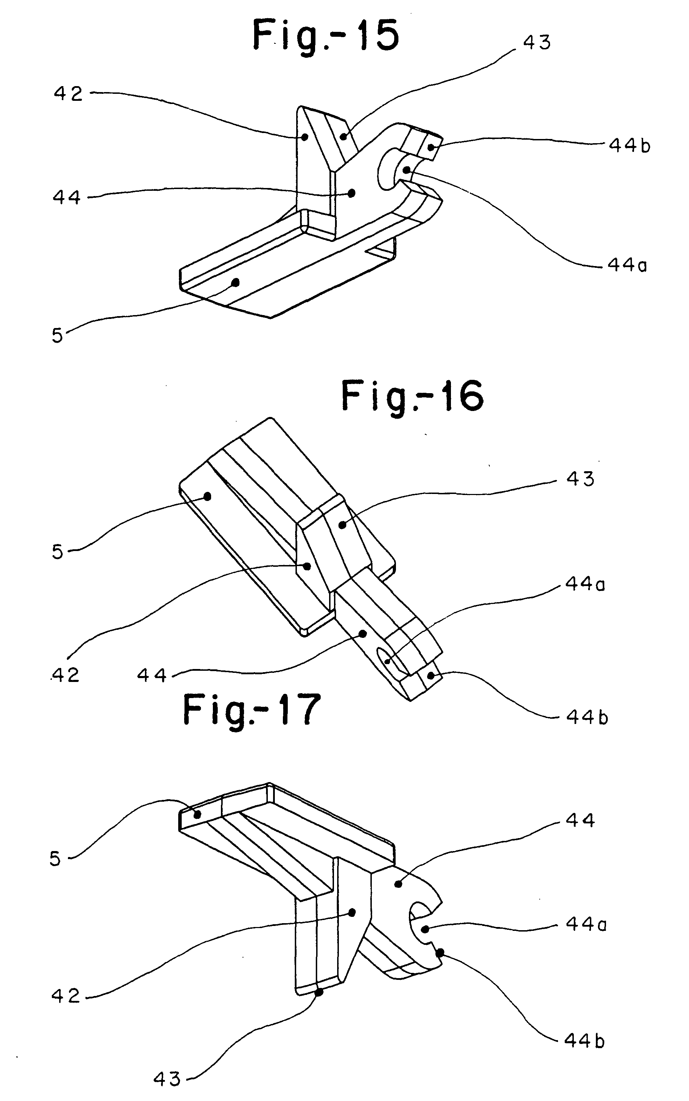

Le repère (4) désigne un élément de branchement ambivalent général (Fig. 8 à 12); le repère (5) désigne les organes de débranchement pour les bornes qui ont des moyens pour le branchement par pincement (Fig. 13 à 17).

Le corps du module ou base creuse (1) est principalement pourvu à ses extrémités de moyens de sertissage sur le châssis (1a) de manière qu'il soit possible de les monter sous le cadre châssis (2) (de bas en haut) sans que la grecque de centrage et emboîtement du châssis interdise le sertissage de celle-ci contre le rebord du cadre et portant des moyens latéraux pour emboîter la base creuse (1) dans les entrants de cette grecque.

En ce qui concerne le corps du module (1), celui-ci comprend à ses extrémités, une zone supérieure en saillie (1a) séparée du corps (1) et une partie supérieure (8) plate, en retrait par rapport aux rebords (10-10a) qui définissent la distance maximale (mesure longitudinale) entre les extrémités de l'embouchure du corps (1). Les extrémités (10-10a) sont coupées en chanfrein en pente vers le bas pour faciliter l'entrée du corps (1) entre les entrants (2b) et les saillies (2a) de la grecque du châssis (2) (Fig. 2 et 4) pour s'accoupler sur le socle (2c) de la grecque dans le châssis (2).

La zone supérieure (1a) qui contient la partie en retrait (8) est séparée latéralement et frontalement du corps (1), (elle a une forme de "L"), définissant deux rainures latérales (9 et 9a), étant coupé au milieu et transversalement par un palier (11) directement en face des saillies (10-10a) du rebord supérieur, en créant entre les deux l'espace de sertissage du corps (1) dans la grecque (2a-2b-2c) dans le cadre châssis (2) complètement immobilisé. C'est pourquoi le plan frontal (12) de ce palier (11) est un chanfrein en pente vers le bas pour faciliter l'entrée du corps (1) lorsqu'il est logé par en haut dans le cadre-châssis (2) (Fig. 2 et 3).

Les plans en chanfrein (10-10a) et (12) décrivent à chaque extrémité du module ou base creuse (1), une arrête de facettes opposées pour faciliter l'entrée, indistinctement, par le bas et par le haut, dans le cadre-châssis (2) de sorte que, dépassant du socle (2c) du cadre (2) depuis le bas et avec une inclinaison simple mais déterminée du module (1) dans son montage, les saillies (10-10a) restent serties au dessus de ce socle et le palier (11) en dessous de celui-ci, assurant un sertissage fixe positionnellement, centré et inamovible.

Les saillies latérales (6) du corps (1) interviennent et collaborent dans cette fonction. Les saillies (6) se projettent extérieurement, chacune, en une paire de nerfs (7) adossés sur la paroi du corps (1) et avec un profil prismatique à facettes convergentes vers le bas pour accomplir la même mission que (10-10a-12) dans les opérations de montage du corps (1) dans le cadre-châssis (2), par emboîtement dans les entrants (2b) de la grecque de celui-ci.

Pour faciliter le démontage du module (1) au niveau de la partie en retrait (8), on a prévu une petite rainure bouchée (13) pour le réaliser simplement, avec la pointe d'un tournevis ou similaire et en y appliquant une légère pression.

La base creuse modulaire ou corps (1), dans une version simple (23 x 47) comprend quatre anses porte-bornes (14), deux à chaque extrémité et deux anses centrales (15), communiquant avec les anses respectives de chaque extrémité.

Latéralement, à l'intérieur, elle est pourvue d'encastrements femelles (16) qui coïncident avec les saillies (6) et d'étriers adjacents à celles-ci (17) pour l'accouplement, l'emboîtement et le centrage du couvercle (3) du module (Fig. 4, 5, 6 et 7) et de rabaissements (17a) adjacents aux rainures (9-9a) de chaque extrémité pour ajustement du couvercle et butée pour éviter l'expulsion des bornes (4).

Enfin, elle présente également, latéralement, les appuis d'articulation (1b), faisant saillie sur le dessus, pour les porte-touches poussoirs des interrupteurs.

Le couvercle (3) (Fig. 4 à 7) a une forme de "H" , les extrémités fermées et les côtés ouverts. Chaque extrémité (20) forme un pallier avec le croisillon, et comporte latéralement un épaulement élevé (21) couronné par une onglette prismatique (22) à la manière de crochets pour s'emboîter dans les encastrements (16) du corps (1).

Ces extrémités (20) ont des pattes (23) en forme de crochets, dirigés vers l'extérieur pour s'ajuster dans les rabaissements (17a) des extrémités du corps (1); des pivots tubulaires (24) alignés avec le bras central du croisillon comme organes de logement du voyant de signalisation et des bouches parallèles à ceux-ci (24a) comme logements pour les ressorts de la touche poussoir; un-rabat (25) au dessous de ce bras et des rainures (26-27) au dessous de chaque extrémité (20) pour s'emboîter entre les cloisons centrales (15a) des anses (15) et dans les cloisons de séparation (14a) des cellules (14), respectivement, du module (1) (Fig. 1 à 4).

Cette disposition assure l'immobilisation des bornes (4) dans leurs cellules (14) respectives, en servant de butée contre l'expulsion des pattes (23) du couvercle (3). Pour les bornes qui ont des moyens de pincement, le couvercle (3) est pourvu, au dessous, de pattes prismatiques en cale (28) qui serviront de butées pour limiter le coefficient de déformation élastique des appliques de contact par pincement. Ces pattes, sont simplement coupées ou cassées, lorsque le branchement se fait par vis.

En revenant au module (1) (Fig. 1 à 4) et notamment à la zone en saillie (1a) qui a un profil en "L" et qui a de chaque côté les rainures verticales (9-9a), dans la partie inférieure de celles-ci on a prévu des accès ovales (18) pour les organes de branchement - débranchement (Fig. 8 à 17), accès qui sont associés à plusieurs nerfs cylindriques (19) transversaux aux rainures (9-9a), pour servir d'axe de basculement aux organes de débranchement (5) dans les bornes à pincement.

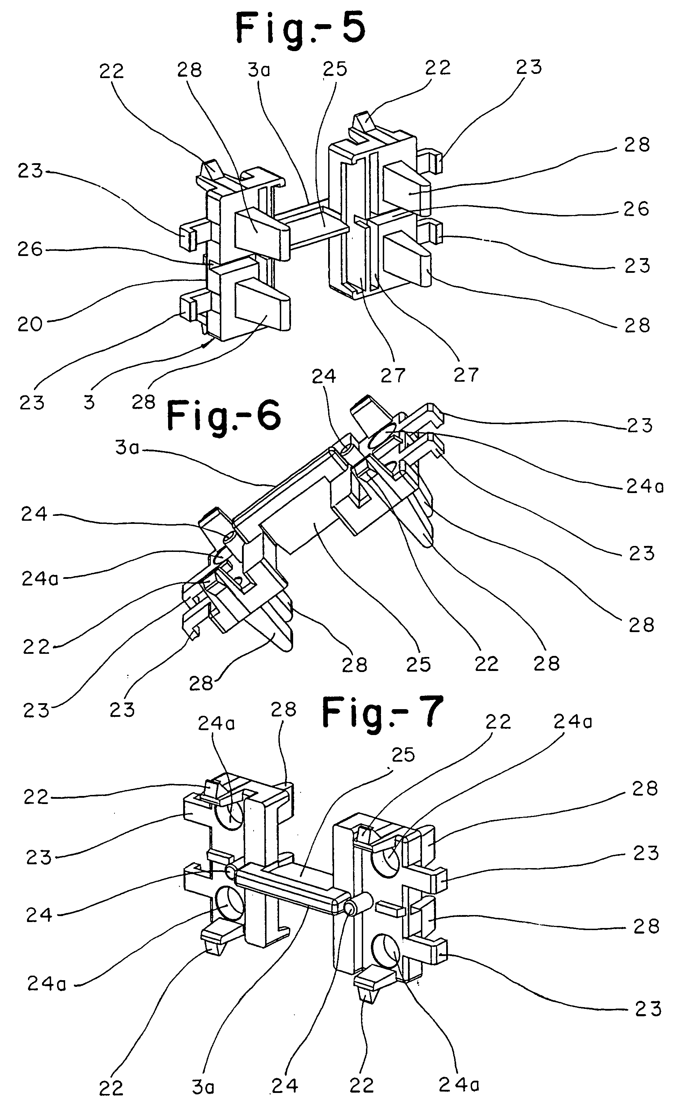

Les bornes (4) (Fig. 5 à 9) sont de simples pièces métalliques en forme de "U" qui ont chacune sur un côté un nerf vertical (31) de renforcement et avec une ouverture (32) entre les deux pour l'accès des moyens de branchement-débranchement, qu'ils soient du type traditionnel à vis ou à pincement.

La paroi opposée du "U" est coupée et estampée au milieu. La coupure génère deux branches (33) et une patte centrale (34), cassée en angle et en saillie, où est monté le contact ou plot fixe (35).

La solution pour le branchement par pincement est résolue par une applique ou feuillard métallique angulaire en "V" (36), aux côtés inégaux (37) et (38) et sommet arrondi (39), coupé au milieu par une rainure verticale (40) entamée sur le bord antérieur du côté plus petit (38) et qui finit sur le côté plus grand (37) à une hauteur convenable.

L'arc du sommet (39) est calculé pour assurer l'élasticité et la pression nécessaires du petit côté (38) dans sa fonction de pincement et/ou accepter un certain effort contre la déformation qui est limité par les cales (28) du couvercle (3) en coïncidant dans l'ouverture angulaire de cette pièce, lorsqu'il faut déborner. Cette marge élastique permet de faire en sorte que les câbles tressés qui s'effilochent souvent ne souffrent pas lors du branchement ou débranchement quand on les presse ou qu'on tire sur eux. Opération que l'organe de débranchement (5) qui agit sur la pièce (36) de pincement facilite avantageusement.

Cette pièce (36) se monte sur la borne (4) en appuyant le côté (37) contre les pattes (33) et le côté (38) contre la paroi opposée (32).

L'organe de débranchement (5) est une pièce indépendante qui, facultativement, est montée sur le module (1) sur les nerfs (19) des rainures (9-9a).

Cet organe (5) est une pièce entière en forme prismatique en cale selon son profil latéral qui, en haut, comporte une échancrure (encoche) circulaire (4a), ouverte et évasée (4b) dans son entrée pour permettre l'accès et l'enclenchement de la pièce (5) dans les nerfs cylindriques (19) du corps modulaire (1), avec la possibilité de basculer -vers l'intérieur et vers l'extérieur- à travers la bouche (18) qui sert pour le branchement-débranchement.

Cet organe (5) dispose, de manière centrale et perpendiculaire, d'un appendice prismatique (42) faisant saillie vers l'intérieur et terminé en pointe (43) qui entre dans l'accès (18) pour pousser contre le côté (38) de la pièce (36) à pincement. La pression de cette pièce (36) maintient déplacé l'organe (5) de débranchement. Une certaine pression de poussée à (5) presse le côté (37) de la pièce (36) ouvrant le passage pour l'entrée ou la sortie du câble avec la limitation imposée par les cales (28) du couvercle (3). Lorsque la pression s'arrête, la pince récupère son moment élastique et presse le câble.

Le caractère indépendant et monopièce de l'organe (5) permet de le fabriquer en diverses couleurs. Cette option garantit la désignation des bornes selon les fonctions concrètes, qui peuvent même coïncider avec les propres couleurs des câbles pour guider les opérateurs ou le personnel non spécialisé vers le montage correct des connexions. L'organe de débranchement (5) a également l'avantage qu'il peut être monté sur les nerfs (19) de basculement, perpendiculairement à ces nerfs (19) en facilitant le système opérationnel automatique de montage, à cause d'encoches (12 à 12b) de chaque côté du chanfrein (12), qui permettent d'obtenir la distance nécessaire pour que le col (44) de l'organe de débranchement (5) arrive aux nerfs (19) en butée avec le corps de cet organe (5).

Une fois convenablement décrite la nature de l'invention, on signale, pour servir et valoir ce que de droit, que celle-ci n'est pas limitée aux détails exacts de cette description, mais qu'au contraire, on y introduira les modifications considérées opportunes, sans sortie du cadre de l'invention telle que revendiquée.

## Revendications

1. Module porte-mécanismes électriques du type comprenant un corps modulaire hexaédrique ou base creuse pourvu d'une compartimentation (14-15) pour le logement de bornes de support de contacts électriques (4), **caractérisé en ce qu'**il comporte
des moyens élastiques ouverts (1a), prévus à des extrémités de la base creuse, pour sertir et immobiliser la base creuse dans un cadre-châssis porte-mécanismes (2), les moyens élastiques ouverts étant adaptés pour permettre le montage de la base creuse par le haut ou par le bas du cadre-châssis,
des moyens auxiliaires (13) pour le démontage de la base creuse du cadre-châssis,
des moyens (18, 9, 9a, 19) permettant l'accouplement de moyens de débranchement (5) des bornes (4) à la base creuse, et
des moyens permettant l'accouplement d'un couvercle de fermeture (3) à la base creuse.

2. Module porte-mécanismes électriques selon la revendication 1, **caractérisé en ce que** lesdits moyens permettant l'accouplement du couvercle (3) à la base creuse sont associés à des moyens latéraux extérieurs (6) permettant l'emboîtement de la base creuse dans une grecque du cadre-châssis.

3. Module porte-mécanismes électriques selon la revendication 1 ou 2, **caractérisé en ce que** les moyens (1a) élastiques pour le sertissage de la base creuse (1), prévus aux extrémités de celle-ci et aptes à être montés sur et sous le châssis (2), sont définis par une saillie de profil général en "L" (1a) avec une zone supérieure (8) en retrait derrière les extrémités limite (10-10a) de l'embouchure du corps (1) du module, cette zone (8) étant pourvue au milieu et transversalement d'un pallier (11) opposé à ces saillies (10-10a), les saillies (10-10a) étant définies par des chanfreins en pente vers l'extérieur, le plan frontal (12) du pallier (11) étant un chanfrein en pente également vers le bas, avec des entailles (12a-12b) dans chacun de ses côtés pour faciliter le montage perpendiculaire des organes de débranchement (5).

4. Module porte-mécanismes électriques selon la revendication 3, **caractérisé en ce que** les moyens auxiliaires de démontage sont constitués par une fine rainure angulaire bouchée (13) située près du bord supérieur du plan en retrait (8).

5. Module porte-mécanismes électriques selon l'une quelconque des revendications 1 à 4, **caractérisé en ce que** lesdits moyens permettant l'accouplement de moyens de débranchement sont constitués par des rainures verticales (9-9a) prévues de part et d'autre des moyens de sertissage élastiques en "L" (1a) dotées, chacune, d'un nerf intérieur cylindrique (19) transversal aux rainures (9-9a) pour l'ancrage et le basculement des moyens de débranchement (5).

6. Module porte-mécanismes électriques selon la revendication 5, **caractérisé en ce qu'**il comprend des moyens (5) de débranchement des bornes par pincement, constitués par un organe monopièce (5) de profil vertical en cale, avec l'extrémité supérieure demi-circulaire pourvue d'une ouverture (échancrure) circulaire (44a) avec entrée évasée (44b) pour son ancrage par pression dans le nerf (19) et un appendice central perpendiculaire (42) à celui-ci, couronné également par une cale (43), pour l'action directe de poussée dans la fonction de branchement-débranchement.

7. Module porte-mécanismes électriques selon la revendication 6, **caractérisé en ce que** l'organe de débranchement (5) monopièce est une pièce indépendante qui peut être fabriquée en diverses couleurs.

8. Module porte-mécansimes électriques selon l'une quelconque des revendications 1 à 7, **caractérisé en ce que** lesdits moyens d'accouplement pour un couvercle (3) sont des entailles (femelles) latérales, verticales internes (16) avec entrée au niveau du bord supérieur du module ou base creuse et avec des épaulements adjacents (17) et des rabaissements (17a) adjacents pour coopérer avec des pattes (23) du couvercle (3).

9. Module porte-mécanismes électriques selon la revendication 8 lorsqu'elle dépend de la revendication 2, **caractérisé en ce que** les entailles verticales (16) sont intimement associées à des épaulements ou saillies latérales (6) se projetant extérieurement chacun en un nerf prismatique convergent (7) adossé aux parois latérales du corps (1) du module.

10. Module porte-mécanismes électriques selon l'une quelconque des revendications 1 à 9, **caractérisé en ce qu'**il comprend un couvercle (3) pour fermer la base creuse (1).

11. Module porte-mécanismes électriques selon la revendication 10 lorsqu'elle dépend de la revendication 8 ou 9, **caractérisé en ce que** le couvercle (3) est constitué par une pièce en forme de "H" dont des extrémités fermées (20) sont pourvues chacune d'une paire de pattes d'ancrage (23) saillantes, en forme de crochet et qui se fixent sur les rabaissements (17a) du corps (1) du module, et, latéralement, de saillies élevées (21) pourvues d'un crochet prismatique latéral (22) à la manière d'une onglette pour s'emboîter dans les entailles (16) du module, ladite pièce comprenant un jeu de quatre bouches (24a) alignées avec les côtés du couvercle et de deux tétons tubulaires (24) alignés avec la zone centrale (3a) du couvercle.

12. Module porte-mécanismes électriques selon la revendication 11, **caractérisé en ce que** le couvercle (3) comporte des rainures axiales (26) et transversales (27) en partie inférieure, et un gousset ou languette (25) axial et perpendiculaire au bord inférieur d'un bras (3a) central du couvercle (3) pour s'emboîter dans des cloisons (14a-15a) de subdivision intérieure du module (1), et quatre saillies prismatiques (28) symétriquement coïncidentes avec des cellules (14) du module (1), avec un profil en cale, qui servent de cales pour des bornes (4) à pincement.

13. Module porte-mécanismes électriques selon la revendication 5, **caractérisé en ce que** la base creuse (1) comprend des cellules (14) portemécanismes ou à bornes métalliques (4), et des accès (18) de préférence de forme ovale, situés dans la partie inférieure des rainures verticales (9-9a), et servant d'entrée pour les moyens de branchement (vis ou pince) et les moyens de débranchement (5).

14. Module porte-mécanismes électriques selon l'une quelconque des revendications 1 à 13, **caractérisé en ce qu'**il comprend des bornes, ou mécanismes métalliques (4), constitués par des pièces métalliques (4) au format général en "U", avec un côté pourvu d'un nerf vertical de renforcement de demi-tige (30-31) et une fenêtre (32) à silhouette mixte, le côté opposé étant coupé au milieu pour définir trois pattes: une supérieure et une autre inférieure alignées (33), puis une autre centrale cassée en angle en saillie vers l'extérieur (34) pourvue d'un contact ou plot (35) fixe.

15. Module porte-mécanismes électriques selon la revendication 14, **caractérisé en ce que** les bornes (4) comprennent une pièce au format angulaire (36) en "V" aux côtés inégaux (37-38) coupés au milieu par une rainure axiale (40) ouverte sur le petit côté et fermée sur le grand côté et avec le sommet sensiblement arqué (39).

16. Module porte-mécanismes électriques selon l'une quelconque des revendications 1 à 15, **caractérisé en ce qu'**il comprend une borne ou mécanisme métallique (4) de base ou ambivalent pour diverses fonctions.

## Claims

1. An electric mechanism holder module of the type comprising a hollow base or hexahedral modular body provided with a compartmentation (14-15) for accommodating electric contact support terminals (4), **characterised in that** it comprises:
open elastic means (1a) provided at ends of the hollow base to crimp and immobilise the hollow base in a mechanism holder chassis frame (2), the open elastic means being adapted to allow the hollow base to be mounted at the top or bottom of the chassis frame,
auxiliary means (13) for removal of the hollow base from the chassis frame,
means (18, 9, 9a, 19) allowing the coupling of disconnecting means (5) for the terminals (4) to the hollow base, and
means for coupling a closure lid (3) to the hollow base.

2. An electric mechanism holder module according to claim 1, **characterised in that** the said means for coupling the lid (3) to the hollow base are associated with external side means (6) allowing the hollow base to be fitted in a notch formed in the chassis frame.

3. An electric mechanism holder module according to claim 1 or 2, **characterised in that** the elastic means (1a) for crimping the hollow base (1) provided at the ends thereof and adapted for mounting on and under the chassis (2) are defined by a general L-shaped profile projection (1a) with an upper zone (8) receding behind the limit ends (10-10a) of the orifice of the body (1) of the module, said zone (8) being provided at the centre and transversely of a bearing (11) remote from said projections (10-10a), the projections (10-10a) being defined by outwardly sloping chamfers, the front plane (12) of the bearing (11) being a chamfer also downwardly sloping, with notches (12a-12b) in each of its sides to facilitate perpendicular fitting of the disconnecting members (5).

4. An electric mechanism holder module according to claim 3, **characterised in that** the auxiliary removal means are formed by a fine angular plugged groove (13) situated near the top edge of the receding plane (8).

5. An electric mechanism holder module according to any one of claims 1 to 4, **characterised in that** the said means for coupling disconnecting means are formed by vertical grooves (9-9a) provided on either side of the L-shaped elastic crimping means (1a) each provided with a cylindrical inner rib (19) extending transversely of the grooves (9-9a) for anchoring and rocking of the disconnecting means (5).

6. An electric mechanism holder module according to claim 5, **characterised in that** it comprises means (5) for disconnecting the terminals by gripping, formed by a one-piece member (5) of wedge-shaped vertical profiles with the top semi-circular end provided with a circular opening (notch) (44a) with a flared inlet (44b) for its anchoring by pressure in the rib (19) and a central attachment (42) perpendicular thereto also crowned by a wedge (43) for direct thrust action in the connecting-disconnecting function.

7. An electric mechanism holder module according to claim 6, **characterised in that** the one-piece disconnecting member (5) is an independent part which can be made in different colours.

8. An electric mechanism holder module according to any one of claims 1 to 7, **characterised in that** the said coupling means for a lid (3) are internal vertical lateral (female) notches (16) with an inlet at the level of the top edge of the module or hollow base and with adjacent shoulders (17) and adjacent lowered portions (17a) to co-operate with lugs (23) of the lid (3).

9. An electric mechanism holder module according to claim 8 dependent on claim 2, **characterised in that** the vertical notches (16) are intimately associated with lateral projections or shoulders (6) each projecting externally into a convergent prismatic rib (7) attached to the side walls of the body (1) of the module.

10. An electric mechanism holder module according to any one of claims 1 to 9, **characterised in that** it comprises a lid (3) to close the hollow body (1).

11. An electric mechanism holder module according to claim 10 dependent on claim 8 or 9, **characterised in that** the lid (3) is formed by an H-shaped part of which the closed ends (20) are each provided with a pair of hook-shaped projecting anchoring lugs (23) and which are fixed on the lowered portions (17a) of the body (1) of the module and, laterally, raised projections (21) provided with a lateral prismatic hook (22) after the style of a stylus to fit into the notches (16) of the module, the said part comprising a set of four mouths (24a) aligned with the sides of the lid and two tubular nipples (24) aligned with the central zone (3a) of the lid.

12. An electric mechanism holder module according to claim 11, **characterised in that** the lid (3) has axial grooves (26) and transverse grooves (27) at the bottom part, and an axial gusset or tongue (25) perpendicular to the bottom edge of a central arm (3a) of the lid (3) to fit in internal sub-division partitions (14a-15a) of the module (1), and four prismatic projections (28) symmetrically coincident with cells (14) of the module (1) with a wedge-shaped profile serving as wedges for gripper terminals (4).

13. An electric mechanism holder module according to claim 5, **characterised in that** the hollow base (1) comprises mechanism holder cells (14) or cells with metal terminals (4) and preferably oval-shaped accesses (18) situated in the bottom part of the vertical grooves (9-9a) and serving as an entry for the connecting means (screw or clamp) and the disconnecting means (5).

14. An electric mechanism holder module according to any one of claims 1 to 13, **characterised in that** it comprises terminals or metal mechanisms (4) in the form of metal parts (4) having the general shape of a U, with one side provided with a vertical half-rod reinforcing rib (30-31) and a mixed-silhouette window (32), the opposite side being cut at the centre to define three lugs: a top one and another bottom one which are aligned (33), and then another central one broken at an angle projecting outwardly (34) provided with a fixed contact or stud (35).

15. An electric mechanism holder module according to claim 14, **characterised in that** the terminals (4) comprise a V-shaped angular format part (36) with unequal sides (37-38) cut at the centre by an axial groove (40) open on the small side and closed on the large side and with the apex substantially arcuate (39).

16. An electric mechanism holder module according to any one of claims 1 to 15, **characterised in that** it comprises a metal mechanism or terminal (4) which is basic or ambivalent for different functions.

## Patentansprüche

1. Modulartiger Halter für elektrische Apparate mit einem modularen hexaedrischen Körper oder einer Vertiefungen aufweisenden Basis, die mit einer Kammeraufteilung (14-15) zur Unterbringung von elektrische Kontakte (4) haltenden Anschlüssen versehen ist, **gekennzeichnet durch**:
an Enden der Vertiefungen aufweisenden Basis vorgesehene frei liegende elastische Mittel (1a) zum Fixieren und Festhalten der Vertiefungen aufweisenden Basis in einem Chassisrahmen (2) des Apparatehalters, wobei die frei liegenden elastischen Mittel dazu ausgebildet sind, die Montage der Vertiefungen aufweisenden Basis zur Oberseite oder zur Unterseite des Chassisrahmen zu ermöglichen;
Hilfsmittel (13) für die Demontage der Vertiefungen aufweisenden Basis aus dem Chassisrahmen;
Mittel, die es ermöglichen, an die Vertiefungen aufweisende Basis Mittel (5) zum Unterbrechen der Anschlüsse (4) anzukoppeln; und
Mittel, die das Ankoppeln einer Abdeckung (3) zum Schließen der Vertiefungen aufweisenden Basis ermöglichen.

2. Modulartiger Halter für elektrische Apparate nach Anspruch 1, **dadurch gekennzeichnet, dass** die genannten Mittel, die das Ankoppeln der Abdeckung (3) an die Vertiefungen aufweisende Basis ermöglichen, seitlichen äußeren Mitteln (6) zugeordnet sind, die das Einfügen der Vertiefungen aufweisenden Basis in eine Ausnehmung des Chassisrahmens ermöglichen.

3. Modulartiger Halter für elektrische Apparate nach Anspruch 1 oder 2, **dadurch gekennzeichnet, dass** die elastischen Mittel (1a) für das Fixieren der Vertiefungen aufweisenden Basis, die an deren Enden vorgesehen und für eine Montage über oder unter dem Chassisrahmen (2) ausgebildet sind, definiert sind durch einen ein generell L-förmiges Profil aufweisenden Vorsprung (1a) mit einer oberen Zone (8), die hinter die begrenzenden Enden (10-10a) der Öffnung des Modulkörpers (1) zurückgesetzt ist, wobei diese Zone (8) in der Mitte und quer zu einer den Vorsprüngen (10-10a) entgegengesetzten Stufe (11) vorgesehen ist, die Vorsprünge (10-10a) durch nach außen geneigte Abfasungen definiert sind, und es sich bei der Frontfläche (12) der Stufe (11) um eine gleichmäßig nach unten geneigte Abfasung handelt, mit Einschnitten (12a-12b) in jeder ihrer Seiten zur leichteren senkrechten Montage der Unterbrecherorgane (5).

4. Modulartiger Halter für elektrische Apparate nach Anspruch 3, **dadurch gekennzeichnet, dass** die Demontagehilfsmittel durch eine feine winkelige geschlossene Ausnehmung (13) gebildet sind, die in der Nähe des oberen Randes der zurückgesetzten Ebene (8) gelegen ist.

5. Modulartiger Halter für elektrische Apparate nach einem der Ansprüche 1 bis 4, **dadurch gekennzeichnet, dass** die das Ankoppeln der Unterbrechermittel ermöglichenden genannten Mittel gebildet sind durch vertikale Ausnehmungen (9-9a), die auf beiden Seiten der "L"-förmigen elastischen Fixiermittel (1a) vorgesehen und je mit einer quer zu den Ausnehmungen (9-9a) verlaufenden inneren zylindrischen Rippe (19) zum Verankern und Kippen der Unterbrechermittel (5) ausgestattet sind.

6. Modulartiger Halter für elektrische Apparate nach Anspruch 5, **gekennzeichnet durch** Mittel (5) zum Unterbrechen des Anschlusses **durch** Drücken, gebildet **durch** ein in Vertikalrichtung ein keilförmiges Profil aufweisendes einstückiges Organ (5) mit einem halbkreisförmigen oberen Ende, das mit einer kreisförmigen Öffnung (Ausnehmung) (44a) mit einem sich konisch erweiternden Eingang (44b) für dessen Verankerung mittels Drucks an der Rippe (19) versehen ist, und mit einem zentralen, dazu senkrechten Fortsatz (42), der gleichermaßen mit einem Keil (43) für die direkte Drückeinwirkung bei der Funktion des Anschließends/Unterbrechens gekrönt ist.

7. Modulartiger Halter für elektrische Apparate nach Anspruch 6, **dadurch gekennzeichnet, dass** das einstückige Unterbrechungsorgan (5) ein unabhängiges Teil ist, das in unterschiedlichen Farben hergestellt werden kann.

8. Modulartiger Halter für elektrische Apparate nach einem der Ansprüche 1 bis 7, **dadurch gekennzeichnet, dass** es sich bei den genannten Mitteln zum Ankoppeln einer Abdeckung (3) um seitliche vertikale innenliegende (weibliche) Ausnehmungen (16) handelt, die einen Eingang auf der Höhe des oberen Randes des Moduls oder der Vertiefungen aufweisenden Basis und benachbarte Schultern (17) und benachbarte Absenkungen (17a) für ein Zusammenwirken mit Haken (23) der Abdeckung (3) aufweisen.

9. Modulartiger Halter für elektrische Apparate nach Anspruch 8 bei dessen Abhängigkeit von Anspruch 2, **dadurch gekennzeichnet, dass** die Ausnehmungen (16) innig verbunden sind mit seitlichen Ansätzen oder Vorsprüngen (6), die sich außerhalb je einer prismatischen konvergierenden Rippe (7) erstrecken, die an Seitenwänden des Modulkörpers (1) angeordnet sind.

10. Modulartiger Halter für elektrische Apparate nach einem der Ansprüche 1 bis 9, **gekennzeichnet durch** eine Abdeckung (3) zum Schließen der Vertiefungen aufweisenden Basis.

11. Modulartiger Halter für elektrische Apparate nach Anspruch 10 bei dessen Abhängigkeit von Anspruch 8 oder 9, **dadurch gekennzeichnet, dass** die Abdeckung (3) durch ein "H"-förmiges Teil gebildet ist, das geschlossene Enden (20) aufweist, je versehen mit einem Paar vorspringender Ankerklauen, die Hakenform aufweisen und sich über den Absenkungen (17a) des Modulkörpers (1) festsetzen, und seitlich mit hochstehenden Vorsprüngen (21), die einen prismatischen seitlichen keilartigen Haken (22) zum Einfügen in die Ausnehmungen (16) des Moduls aufweisen, wobei besagtes Teil einen Satz von vier mit den Seiten der Abdeckung ausgerichtete Öffnungen (34a) und zwei mit der Mittelzone (3a) der Abdeckung ausgerichtete rohrförmige Ansätze (24) aufweist.

12. Modulartiger Halter für elektrische Apparate nach Anspruch 11, **dadurch gekennzeichnet, dass** die Abdeckung (3) in einem unteren Bereich axiale (26) und transversale (27) Ausnehmungen aufweist und versehen ist mit einem axialen und zu einem unteren Rand eines mittigen Armes (3a) der Abdeckung (3) senkrechten Steg oder Streifen (25) zum Einfügen in den Innenraum des Moduls (1) unterteilende Zwischenwände (14a-15a) und mit vier prismatischen Vorsprüngen (28), die symmetrisch mit Zellen (14) des Moduls (1) zusammenfallen, ein Keilprofil aufweisen und als Keile für die Quetschanschlüsse (4) dienen.

13. Modulartiger Halter für elektrische Apparate nach Anspruch 5, **dadurch gekennzeichnet, dass** die Vertiefungen aufweisende Basis (1) Zellen zum Halten von Apparaten oder für metallische Anschlüsse (4) und Zugangseinrichtungen (18), die vorzugsweise eine ovale Form haben, im unteren Bereich der vertikalen Ausnehmungen (9-9a) gelegen sind und dem Zugang für Mittel zum Anschließen (Schraube oder Klemme) und Mittel zum Unterbrechen (5) dienen, aufweist.

14. Modulartiger Halter für elektrische Apparate nach einem der Ansprüche 1 bis 13, **gekennzeichnet durch** Anschlüsse oder metallische Apparate (4), gebildet **durch** generell "U"-förmige Metallstücke (4) mit einer Seite, die mit einer vertikalen halbstammförmigen Verstärkungsrippe (30-31) und einem Fenster (32) mit gemischter Form versehen ist, und mit einer entgegengesetzten Seite, die in der Mitte geschnitten ist, um drei Lappen zu bilden: einen oberen und einen weiteren unteren (33), die miteinander ausgerichtet sind,und noch einen mittleren weiteren, der einen nach außen vorspringenden Winkel aufweist und mit einem festen Kontakt oder Kontaktstück (35) versehen ist.

15. Modulartiger Halter für elektrische Apparate nach Anspruch14, **dadurch gekennzeichnet, dass** der Anschluss (4) ein "V"-förmiges Winkelstück (36) mit ungleichen Seiten (37-38) aufweist, die in der Mitte durch einen axialen Einschnitt (40) zerschnitten sind, der auf der kleinen Seite offen und auf der großen Seite geschlossen ist, mit einem deutlich gekrümmten Scheitel.

16. Modulartiger Halter für elektrische Apparate nach einem der Ansprüche 1 bis 15, **gekennzeichnet durch** einen Anschluss oder einen metallischen Apparat (4) mit Grundfunktion oder ambivalent für diverse Funktionen.
